# EUROPEAN PATENT SPECIFICATION

(11) **EP 3 616 871 B1**
(45) Date of publication and mention of the grant of the patent: **17.03.2021**
(21) Application number: 19193217.7
(22) Date of filing: 23.08.2019
(51) Int. Cl.: B29C 31/00, B29C 45/17

(54) **INJECTION MOLDING SYSTEM**
SPRITZGIESSSYSTEM
SYSTÈME DE MOULAGE PAR INJECTION

(30) Priority: 31.08.2018 JP 2018163965
(43) Date of publication of application: 04.03.2020
(73) Proprietor: Sumitomo Heavy Industries, Ltd., Tokyo 141-6025 (JP)
(72) Inventor: HOTTA, Daigo, Chiba, 263-0001 (JP); MATSUNAGA, Takuya, Chiba, 263-0001 (JP)
(74) Representative: Louis Pöhlau Lohrentz

(56) References cited:
- JP-A- 2004 249 637
- US-A- 4 555 228
- US-A1- 2015 298 376
- BAUER R: "DAS SPRITZGIESSWERKZEUG ALS BAUSTEIN EINER AUTOMATISIERTEN FERTIGUNG", KUNSTSTOFFE, CARL HANSER VERLAG, MUNCHEN, DE, vol. 79, no. 11, 1 November 1989 (1989-11-01), pages 1135-1138, XP000175214, ISSN: 0023-5563
- MICHAELI W ET AL: "INDUSTRIELLER EINSATZ DER FLEXIBLEN AUTOMATI-SIERUNG IN SPRITZGIESS-BETRIEBEN", KUNSTSTOFFE, CARL HANSER VERLAG, MUNCHEN, DE, vol. 79, no. 9, 1 September 1989 (1989-09-01), pages 767-777, XP000175026, ISSN: 0023-5563

## Description

### BACKGROUND OF THE INVENTION

### Field of the Invention

The present invention relates to an injection molding system.

### Description of Related Art

Japanese Patent No. 2610120 relates to a molding method of using a plurality of molds and discloses that, if a transferred mold is mounted on a molding product take-out unit, a locking mechanismprovided in the moldis released. Inaddition, Japanese Patent No. 2610120 discloses that the mold from which the molding product is taken out is clamped and locked so as not to be opened and is transferred to the next process Document US 2015/298376 A1 also discloses a mold attaching method for a mold clamping device.

### SUMMARY OF THE INVENTION

Meanwhile, for example, as a locking mechanism for preventing a mold from being opened during a transfer of the mold, a method of fixing a plate to a movable mold and a stationary mold by a bolt is known. In this method, it is necessary for an operator to remove the bolt and the plate after attaching the mold to a machine body. Accordingly, even if an exchange work of the mold is unmanned using an automatic exchange carriage, there is a problem that personnel are required for removing the bolt and plate and it cannot be unmanned. In addition, if the mold is opened before the bolt or plate is removed, there is a concern that the bolt or plate is broken, the mold is damaged, or the like.

Accordingly, an object of the present invention is to provide an injection molding system appropriately capable of exchanging a mold.

According to an aspect of an embodiment, there is provided an injection molding system, including: a mold clamping unit which attaches a mold unit to a stationary platen and a movable platen; a mold exchange device which exchanges the mold unit attached to the mold clamping unit; a control unit which controls the mold clamping unit and the mold exchange device; and a detection unit which detects a locked state and an unlocked state of a locking mechanism, in which the mold unit includes the locking mechanism which has the locked state where a stationary mold and a movable mold are locked and the unlocked state where locks of the stationary mold and the movable mold are released, the control unit controls the locked state and the unlocked state of the locking mechanism, and in a case where it is detected that the locking mechanism of the mold unit attached to the mold clamping unit is in the unlocked state, the control unit permits mold opening by the mold clamping unit.

According to the present invention, it is possible to provide an injection molding system capable of appropriately performing mold exchange.

### BRIEF DESCRIPTION OF THE DRAWINGS

Fig. 1 is a plan view of an inj ection molding system according to an embodiment.
Fig. 2 is a control block diagram of the injection molding system according to the embodiment.
Fig. 3 is a plan view of the injection molding system according to the embodiment.
Fig. 4 is a plan view of the injection molding system according to the embodiment.
Fig. 5 is a plan view of the injection molding system according to the embodiment.
Fig. 6 is a plan view of the injection molding system according to the embodiment.
Fig. 7 is a plan view of the injection molding system according to the embodiment.
Fig. 8 is a flowchart of mold exchange in the injection molding system according to the embodiment.
Fig. 9 is a plan view of an inj ection molding system according to another embodiment.
Fig. 10 is a plan view of the injection molding system according to another embodiment.
Fig. 11 is a flowchart of mold exchange in the injection molding system according to another embodiment.

### DETAILED DESCRIPTION OF THE INVENTION

Hereinafter, embodiments of the present invention will be described with reference to the drawings. In the drawings, the same or corresponding reference symbols are assigned to the same or corresponding configurations, and repeated descriptions are omitted.

### <<Injection Molding System According to Embodiment>>

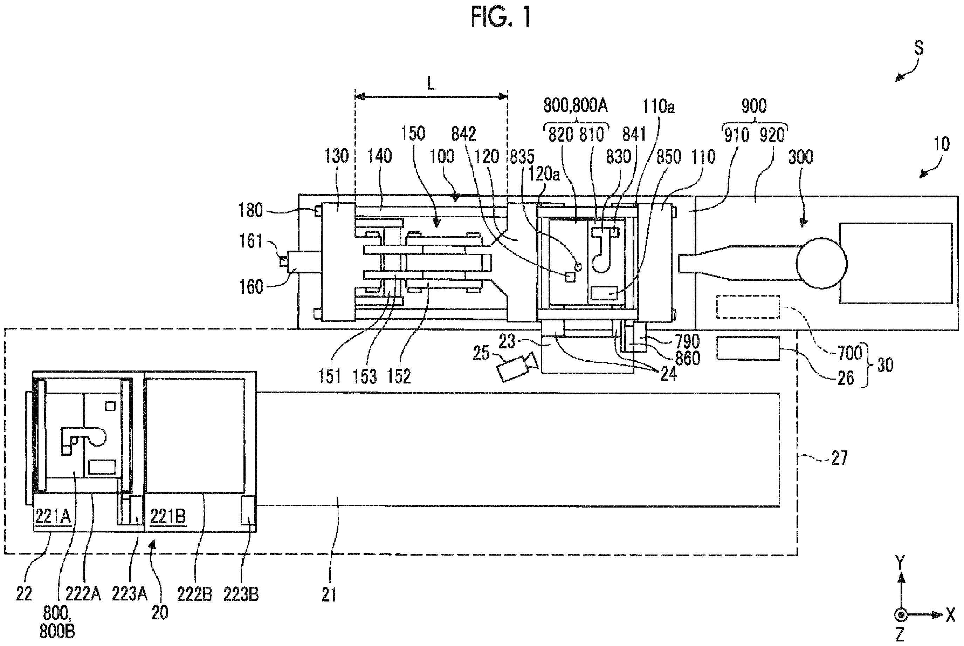

An injection molding system S according to an embodiment will be described with reference to Fig. 1. Fig. 1 is a plan view of the inj ection molding system S according to the embodiment. In addition, in Fig. 1, an X axis direction, a Y axis direction, and a Z axis direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. A negative side in the Y axis direction is referred to as an operation side and a positive side in the Y axis direction is referred to as a counter-operation side.

The injection molding system S includes the injection molding machine 10 and a mold exchange device 20.

### <Injection Molding Machine>

The injection molding machine 10 includes the mold clamping unit 100, an ejector unit (not shown), an injection unit 300, a movement unit (not shown), a molding machine controller 700, and a frame 900. The frame 900 includes a mold clamping unit frame 910 and an injection unit frame 920. Each of the mold clamping unit frame 910 and the injection unit frame 920 is installed on a floor (not shown) via a leveling adjuster (not shown). The molding machine controller 700 is disposed in an internal space of the injection unit frame 920. Hereinafter, each component of the injection molding machine 10 will be described.

### (Mold Clamping Unit)

In descriptions of the mold clamping unit 100, a movement direction (for example, an X axis positive direction) of a movable platen 120 when a mold is closed is defined as a front side, and a movement direction (for example, an X axis negative direction) of the movable platen 120 when the mold is opened is defined as a rear side.

The mold clamping unit 100 performs mold closing, pressurizing, depressurizing, and mold opening of a mold unit 800. An operation from start of the pressurizing to end of the depressurizing is referred to as clamping. The mold unit 800 includes a stationary mold 810 and a movable mold 820.

For example, in the case where a mold clamping unit 100 is a horizontal type mold clamping unit, the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism (not shown), and a mold space adjustment mechanism 180.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide (not shown) which guides the movable platen 120 is placed on the mold clamping unit frame 910. A movable mold 820 is attached to a surface of the movable platen 120 facing the stationary platen 110. The movable platen 120 moves forward or rearward with respect to the stationary platen 110, and thus, the mold closing, pressurizing, depressurizing, and mold opening of the mold unit 800 are performed.

The toggle support 130 is disposed so as to be separated from the stationary platen 110, and is placed on the mold clamping unit frame 910 to be movable in mold opening and closing directions. In addition, the toggle support 130 may be disposed to be movable along a guide which is placed on the mold clamping unit frame 910. The guide of the toggle support 130 may be also used as the guide (not shown) of the movable platen 120.

In addition, in the present embodiment, the stationary platen 110 is fixed to the mold clamping unit frame 910, and the toggle support 130 is disposed to be movable in the mold opening and closing directions with respect to the mold clamping unit frame 910. However, the toggle support 130 may be fixed to the mold clamping unit frame 910, and the stationary platen 110 may be disposed to be movable in the mold opening and closing directions with respect to the mold clamping unit frame 910.

The stationary platen 110 and the toggle support 130 are connected to each other with a gap L in the mold opening and closing directions by the tie bar 140. A plurality of (for example, four) tie bars 140 may be used. The plurality of tie bars 140 are parallel to each other in the mold opening and closing directions and extend according to a mold clamping force. A tie bar strain detector (not shown) which detects strain of the tie bar 140 may be provided in at least one tie bar 140. The tie bar strain detector (not shown) sends a signal indicating a detection result to the molding machine control unit 700. The detection result of the tie bar strain detector (not shown) is used for detection or the like of the mold clamping force.

In addition, in the present embodiment, the tie bar strain detector (not shown) is used as a mold clamping force detector which detects the mold clamping force. However, the present invention is not limited to this. The mold clamping force detector is not limited to a strain gauge type detector, and maybe a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected to each other by pins or the like . The first link 152 is attached to the movable platen 120 so as to be oscillated by pins or like and the second link 153 is attached to the toggle support 130 so as to be oscillated by pins or the like. The second link 153 is attached to the crosshead 151 via a third link (not shown). If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the above-described configuration. For example, as described above, the number of nodes of each link group is five. However, the number of nodes maybe four, and one end portion of the third link (not shown) may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism (not shown). However, the mold clamping motor 160 may be connected to the motion conversion mechanism (not shown) via a belt, a pulley, or the like.

The motion conversion mechanism (not shown) converts a rotary motion of the mold clamping motor 160 into a linear motion of the crosshead 151. The motion conversion mechanism (not shown) includes a screw shaft and a screw nut which is screwed to the screw shaft. A ball or a roller may be interposed between the screw shaft and the screw nut.

The mold clamping unit 100 performs a mold closing process, a pressurizing process, a depressurizing process, a mold opening process, or the like under a control of the molding machine controller 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the molding machine controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurizing process, the mold clamping motor 160 is further driven to further move the crosshead 151 forward from the mold closing completion position to a mold clamping position, and thus, a mold clamping force is generated. When the mold is clamped, a cavity space (not shown) is formed between the movable mold 820 and the stationary mold 810, and the cavity space (not shown) is filled with a liquid molding material by the injection unit 300. A filled molding material is solidified, and thus, a molding product can be obtained.

One cavity space (not shown) may be provided or a plurality of cavity spaces (not shown) may be provided. In the latter case, a plurality of molding products are obtained simultaneously. An insert material may be disposed in a portion of the cavity space (not shown), and the other portion of the cavity space (not shown) may be filled with the molding material. A molding product in which the insert material and the molding material are integrated with each other is obtained.

In the depressurizing process, the mold clamping motor 160 is driven to move the crosshead 151 rearward from the mold clamping position to a mold opening start position, and thus, the movable platen 120 is moved rearward, and the mold clamping force decreases . The mold opening start position and the mold closing completion position may be the same as each other.

In the mold opening process, the mold clamping motor 160 is driven to move the crosshead 151 rearward from the mold opening start position to a mold opening completion position at a set movement speed. Accordingly, the movable platen 120 moves rearward, and the movable mold 820 is separated from the stationary mold 810. Thereafter, the ejector unit (not shown) ejects the molding product from the movable mold 820.

Setting conditions in the mold closing process and the pressurizing process are collectively set as a series of setting conditions. For example, the movement speed or positions (including mold closing start position, movement speed switching position, mold closing completion position, and mold clamping position) and the mold clamping force of the crosshead 151 in the mold closing process and the pressurizing process are collectively set as a series of setting conditions. The mold closing start position, the movement speed switching position, the mold closing completion position, and the mold clamping position are arranged in this order from the rear side to the front side and indicate start points and end points of sections where the speed is set. The speed is set for each section. The movement speed switching position may be one or more. The movement speed switching position may not be set. Only one of the mold clamping position and the mold clamping force may be set.

Setting conditions are similarly set in the depressurizing process and the mold opening process. For example, the movement speed or positions (including mold opening start position, movement speed switching position, and mold opening completion position) of the crosshead 151 in the depressurizing process and the mold opening process are collectively set as a series of setting conditions. The mold opening start position, the movement speed switching position, and the mold opening completion position are arranged in this order from the front side to the rear side and indicate start points and end points of sections where the movement speed is set. The speed is set for each section. The movement speed switching position may be one or more. The movement speed switching position may not be set. The mold opening start position and the mold closing completion position may be the same as each other. In addition, the mold opening completion position and the mold closing start position are the same as each other.

In addition, instead of the movement speed, the positions, or the like of the crosshead 151, a movement speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by a change of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a mold touch where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. For example, the mold space adjustment mechanism 180 includes a shaft which is formed on a rear end portion of the tie bar 140, a screw nut which is held to be rotatable and unmovable forward or rearward by the toggle support 130, and a mold space adjustment motor which rotates the screw nut screwed to the screw shaft.

The screw shaft and the screw nut are provided for each tie bar 140. A rotational driving force of the mold space adjustment motor may be transmitted to a plurality of screw nuts via a rotational driving force transmission portion. The plurality of screw nuts can be synchronously rotated with each other. In addition, it is possible to rotate the plurality of screw nuts individually by changing a transmission path of the rotational driving force transmission portion.

For example, the rotational driving force transmission portion includes a gear or the like. In this case, a driven gear is formed on an outer periphery of each screw nut. A drive gear is attached to an output shaft of the mold space adjustment motor. An intermediate gear which engages with a plurality of driven gears and drive gears is rotatably held by a center portion of the toggle support 130. In addition, the rotational driving transmission portion may include a belt, a pulley, or the like instead of the gear.

An operation of the mold space adjustment mechanism 180 is controlled by the molding machine controller 700. The molding machine controller 700 drives the mold space adjustment motor to rotate the screw nut. As a result, the position of the toggle support 130, which rotatably holds the screw nut and holds the screw nut such that the screw nut is unmovable forward or rearward, with respect to the tie bar 140 is adjusted, and the gap L between the stationary platen 110 and the toggle support 130 is adjusted. In addition, the plurality of mold space adjustment mechanisms may be used in combination.

The gap L is detected using a mold space adjustment motor encoder. The mold space adjustment motor encoder detects a rotation amount or a rotation direction of the mold space adjustment motor and sends a signal indicating a detection result to the control unit 700. The detection result of the mold space adjustment motor encoder is used to monitor or control the position of the toggle support 130 or the gap L. In addition, a toggle support position detector which detects the position of the toggle support 130 and a gap detector which detects the gap L are not limited to the mold space adjustment motor encoder, and a general encoder can be used.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are an up-down direction.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

The mold clamping unit 100 is covered with a cover (not shown). An opening portion through which the mold unit 800 is carried in and carried out is provided in the cover. In addition, a door for opening or closing the opening portion of the cover is provided. Moreover, in the injection molding machine 10 according to the embodiment, the door is open always.

### (Ejector Unit)

The ejector unit (not shown) is attached to the movable platen 120 andmoves forward or rearward together with the movable platen 120. The ejector unit (not shown) performs an ejection process under the control of the molding machine controller 700. In the ejection process, the ejector rod (not shown) moves forward from a standby position to an ejection position at a set movement speed, and thus, a movable member (not shown) moves forward and the molding product is ejected. Thereafter, an ejector motor (not shown) is driven to move an ejector rod (not shown) rearward at a set movement speed, and thus, the movable member (not shown) moves rearward to an original standby position.

### (Injection Unit)

The injection unit 300 is disposed to be movable forward or rearward with respect to the mold unit 800. The injection unit 300 comes into contact with the mold unit 800, and the cavity space (not shown) inside the mold unit 800 is filled with the molding material by the injection unit 300. For example, the injection unit 300 includes a cylinder, a nozzle, the screw, a plasticizing motor, an injection motor, a pressure detector, or the like.

### (Movement Unit)

The movement unit (not shown) moves the injection unit 300 forward or rearward with respect to the mold unit 800. In addition, the movement unit (not shown) presses the nozzle to the mold unit 800 to generate a nozzle touch pressure.

### (Molding Machine Controller)

For example, the molding machine controller 700 is constituted by a computer, and includes a Central Processing Unit (CPU), a recording medium such as a memory, an input interface, and an output interface. The molding machine controller 700 performs various controls by causing the CPU to execute a program stored in the recording medium. In addition, the molding machine controller 700 receives a signal from the outside through the input interface and transmits a signal to the outside through the output interface.

In addition, the stationaryplaten 110 includes an automatic clamping device 110a which attaches the stationary mold 810. In addition, the movable platen 120 includes an automatic clamping device 120a which attaches the movable mold 820. The automatic clamping devices 110a and 120a are controlled by the molding machine controller 700 and are attached to or to be removed the mold. In addition, the automatic clamping devices 110a and 120a may be clamp devices having a mechanical lock mechanism movable by an oil pressure, air pressure, or the like, may be clamp devices which clamp a mold by a magnetic force, and are not limited.

In addition, the injection molding machine 10 is provided with an auto coupler 790. When the mold unit 800 is attached to the injection molding machine 10, the auto coupler 790 of the injection molding machine 10 is connected to the auto coupler 860 of the mold unit 800 described later. Accordingly, the molding machine controller 700 and a mold control unit 850 of the mold unit 800 described later are communicably connected to each other.

### <Mold Exchange Device>

The mold exchange device 20 includes a traveling rail 21, a carriage 22, a bridge 23, a drive roller 24, a camera 25, an exchange device controller 26, and a fence 27.

The carriage 22 moves on the traveling rail 21. The movement of the carriage 22 is controlled by the exchange device controller 26. Moreover, the carriage 22 includes a first placement portion 221A and a second placement portion 221B on which the mold unit 800 is placed. In addition, the carriage 22 reciprocates between a reference position shown in Fig. 1 and a delivery position at which the mold unit 800 is delivered to the bridge 23.

A conveyor portion 222A is provided on an upper surface of the first placement portion 221A. In addition, for example, the conveyor portion 222A is a drive roller conveyor, and is controlled by the exchange device controller 26. The conveyor portion 222A is used when the mold unit 800 is carried into the first placement portion 221A or when the mold unit 800 is carried out from the first placement portion 221A.

In addition, an auto coupler 223A is provided in the first placement portion 221A. When the mold unit 800 is placed on the first placement portion 221A, the auto coupler 223A is connected to an auto coupler 860 of the mold unit 800 described later. Accordingly, the exchange device controller 26 and the mold control unit 850 of the mold unit 800 described later are communicably connected to each other.

Similarly to the first placement portion 221A, the second placement portion 221B includes a conveyor portion 222B and an auto coupler 223B.

The bridge 23 is disposed between the carriage 22 and the injection molding machine 10 and is used when the mold unit 800 is transported. A conveyor is provided on an upper surface of the bridge 23 and is controlled by the exchange device controller 26.

The drive roller 24 is disposed below the stationary platen 110 and the movable platen 120 in the injection molding machine 10. The drive roller 24 is used when the mold unit 800 carried into the injection molding machine 10 is transported to a clamping position, or when the mold unit 800 is carried out from the injection molding machine 10. In addition, the drive roller 24 is provided in each of the stationary platen 110 and the movable platen 120. The drive roller 24 transports the mold unit 800 in a state of placing both ends of the mold unit 800. The molding product ejected by the ejector unit can pass between the drive rollers 24. The drive roller 24 is controlled by the exchange device controller 26.

The camera 25 captures an image of the mold unit 800 transported between the carriage 22 and the injection molding machine 10. The captured image is sent to the exchange device controller 26. In addition, the captured image may be sent to molding machine controller 700.

In addition, the fence 27 is provided around the traveling rail 21 and the carriage 22 to prevent a worker from entering a movement range of the carriage 22.

### <Mold unit>

The mold unit 800 includes the stationary mold 810, the movable mold 820, a lock lever 830, a lock pin 835, detection sensors 841, 842, the mold control unit 850, and the auto coupler 860.

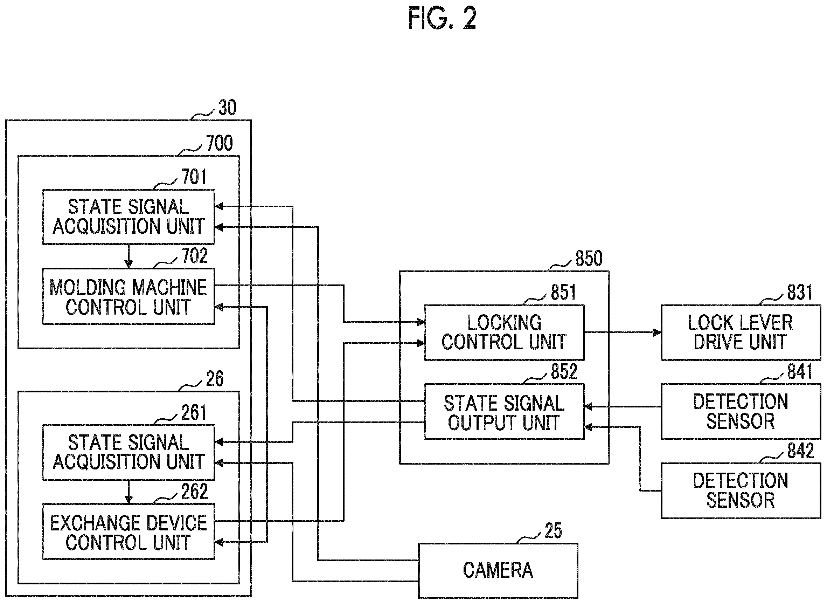

The lock lever 830 and the lock pin 835 constitute a locking mechanism of the mold unit 800. The stationary mold 810 and the movable mold 820 are locked by engagement of the lock lever 830 with the lock pin 835. The lock lever 830 is driven by a lock lever drive unit 831 (refer to Fig. 2 described later) which drives the lock lever 830. The lock lever 830 can be in a lock position where the lock lever 830 and the lock pin 835 engage with each other and the mold unit 800 is locked. Further, the lock lever 830 can be in a release position where the engagement between the lock lever 830 and the lock pin 835 is released and the lock of the mold unit 800 is released. In addition, the lock lever 830 is biased to the lock position by a biasing unit (not shown) . In a state where the lock lever drive unit 831 is not operated, the lock lever 830 maintains the lock position.

The detection sensor 841 detects whether the lock lever 830 is positioned at the release position. The detection sensor 842 detects whether the lock lever 830 is positioned at the lock position. In addition, the detection results of the detection sensors 841 and 842 are transmitted to the mold control unit 850. In addition, for example, as the detection sensors 841 and 842, a pressure sensor, a proximity sensor, a limit switch, or the like can be used.

The mold control unit 850 is communicably connected to the molding machine controller 700 or the exchange device controller 26 via the auto coupler 860. In addition, the mold control unit 850 controls a lock lever drive unit 831 (refer to Fig. 2 described later) which drives the lock lever 830 based on a command from the molding machine controller 700 or the exchange device controller 26. In addition, in a case where the detection sensor 841 detects that the lock lever 830 is positioned at the release position, the mold control unit 850 transmits a state signal indicating unlocking to the molding machine controller 700 or the exchange device controller 26. Meanwhile, in a case where the detection sensor 842 detects that the lock lever 830 is positioned at the lock position, the mold control unit 850 transmits a state signal indicating locking to the molding machine controller 700 or the exchange device controller 26.

The mold control unit 850 of the mold unit 800 placed on the first placement portion 221A is communicably connected to the exchange device controller 26 of the mold exchange device 20 via the auto couplers 860 and 223A. The mold control unit 850 of the mold unit 800 placed on the second placement portion 221B is communicably connected to the exchange device controller 26 of the mold exchange device 20 via the auto couplers 860 and 223B. The mold control unit 850 of the mold unit 800 attached to the injection molding machine 10 is communicably connected to the molding machine controller 700 of the injection molding machine 10 via the auto couplers 860 and 790.

Next, each control unit of the injection molding system S according to the embodiment will be described with reference to Fig. 2. Fig. 2 is a control block diagram of the injection molding system S according to the embodiment.

The mold control unit 850 includes a locking control unit 851 and a state signal output unit 852. The molding machine controller 700 includes a state signal acquisition unit 701 and a molding machine control unit 702. The exchange device controller 26 includes a state signal acquisition unit 261 and an exchange device control unit 262. In addition, the molding machine controller 700 and the exchange device controller 26 maybe collectively referred to as a control unit 30 which controls the injection molding system S.

The locking control unit 851 controls the lock lever drive unit 831 based on a control command from the molding machine control unit 702 or the exchange device control unit 262.

The state signal output unit 852 outputs a state signal indicating whether the mold unit 800 is locked or unlocked based on detection results of the detection sensors 841 and 842 to the state signal acquisition unit 701 of the molding machine controller 700 or the state signal acquisition unit 261 of the exchange device controller 26.

The state signal from the state signal output unit 852 is input to the state signal acquisition unit 701, and thus, the state signal acquisition unit 701 acquires whether the mold unit 800 is locked or unlocked. In addition, the image from the camera 25 is input to the state signal acquisition unit 701. The state signal acquisition unit 701 can acquire the state signal by determining whether the mold unit 800 is locked or unlocked based on the image of the mold unit 800 captured by the camera 25. The state signal acquisition unit 701 outputs the acquired state signal to the molding machine control unit 702.

The molding machine control unit 702 controls the entire injection molding machine 10. In addition, the molding machine control unit 702 permits (releases an interlock) the operation of the injection molding machine 10 based on the state signal acquired by the state signal acquisition unit 701. In addition, the molding machine control unit 702 outputs a control command which instructs the locking control unit 851 to open and close the lock lever 830. In addition, the molding machine control unit 702 is communicably connected to the exchange device control unit 262.

The state signal from the state signal output unit 852 is input to the state signal acquisition unit 261, and thus, the state signal acquisition unit 261 can acquire whether the mold unit 800 is locked or unlocked. In addition, the image from the camera 25 is input to the state signal acquisition unit 261. The state signal acquisition unit 261 can acquire the state signal by determining whether the mold unit 800 is locked or unlocked based on the image of the mold unit 800 captured by the camera 25. The state signal acquisition unit 261 outputs the acquired state signal to the exchange device control unit 262.

The exchange device control unit 262 controls the entire exchange device controller 26. In addition, the exchange device control unit 262 permits (releases the interlock) the operation of the exchange device controller 26 based on the state signal acquired by the state signal acquisition unit 261. In addition, the exchange device control unit 262 outputs a control command which instructs the locking control unit 851 to open or close the lock lever 830. Further, the exchange device control unit 262 is communicably connected to the molding machine control unit 702.

### <Operation of Injection Molding System>

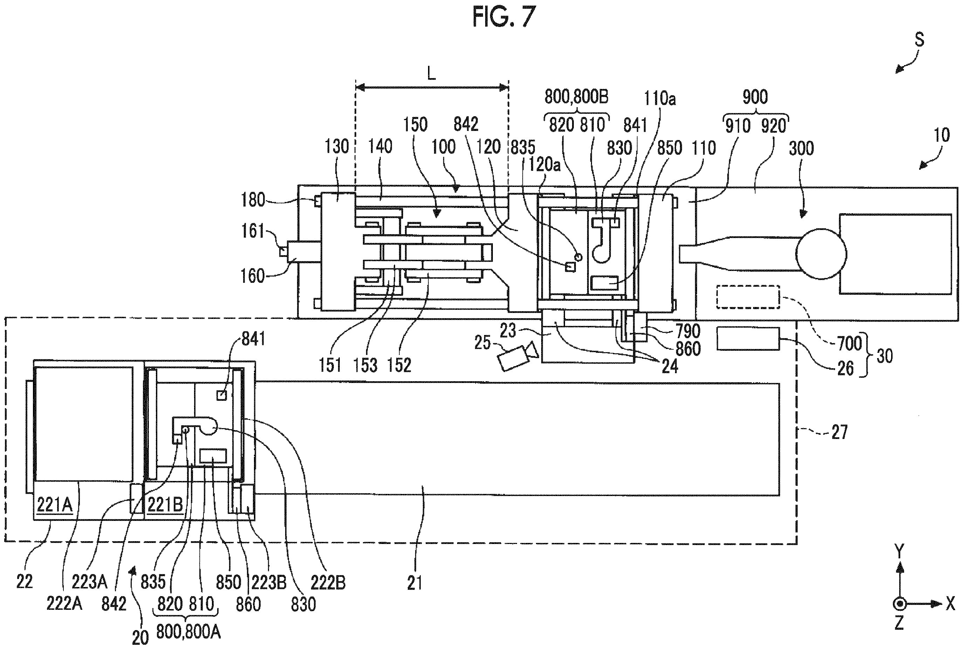

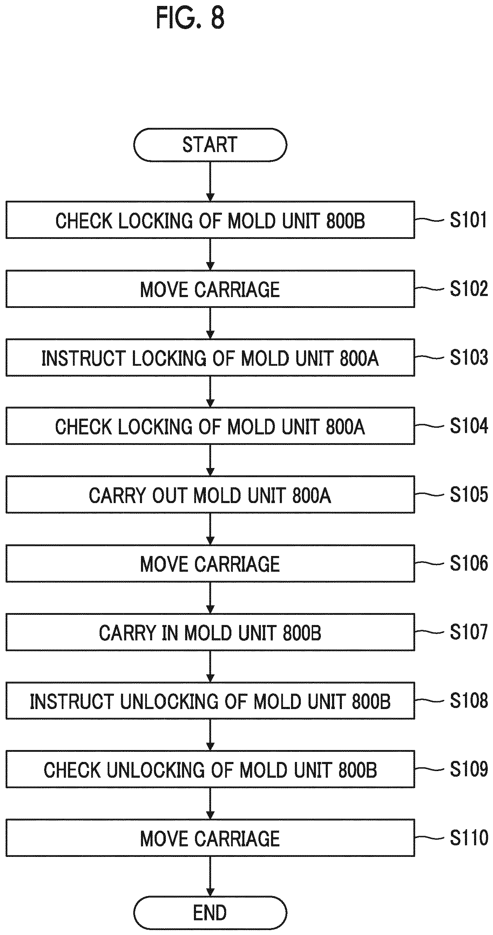

Next, an operation of the injection molding system S according to the embodiment will be described using Fig. 8 with reference to Figs. 1, 3 to 7. Figs. 1, 3 to 7 are plan views showing each state of the injection molding system S according to the embodiment. Fig. 8 is a flowchart of a control for exchanging the mold unit 800 in the injection molding system S according to the embodiment.

When a flow shown in Fig. 8 starts, the injection molding system S is in the state shown in Fig 1. That is, the mold unit 800A is attached to the injection molding machine 10. In addition, the mold unit 800B carried in from the outside is placed on the first placement portion 221A of the carriage 22. Hereinafter, an operation of exchanging the mold unit 800A with the mold unit 800B in the mold unit attached to the injection molding machine 10 will be described.

In Step S101, the exchange device control unit 262 checks a locked state of the locking mechanism of the mold unit 800B placed on the carriage 22. In addition, the movement of the mold units 800A and 800B has a condition that the locking mechanism is in the locked state. Specifically, the state signal acquisition unit 261 receives the state signal indicating the unlocking or locking from the state signal output unit 852 of the mold unit 800B via the auto couplers 860 and 223A. The state signal acquisition unit 261 outputs the received state signal to the exchange device control unit 262. When the exchange device control unit 262 receives the state signal indicating that the mold unit 800B is locked, the exchange device control unit 262 permits the movement of the carriage 22 (releases the interlock) .

In Step S102, the exchange device control unit 262 moves the carriage 22 to a position at which the second placement portion 221B corresponds to the bridge 23. In addition, even during the movement of the carriage 22, the locked state of the locking mechanism of the mold unit 800B is monitored via the auto couplers 860 and 223A. Moreover, in a case where an unlocked state of the locking mechanism of the mold unit 800B is detected, the transport of the mold unit 800B is stopped (the movement of the carriage 22 is stopped) . If the movement of the carriage 22 is completed, the exchange device control unit 262 notifies the molding machine control unit 702 that the second placement portion 221B has moved to the position corresponding to the bridge 23.

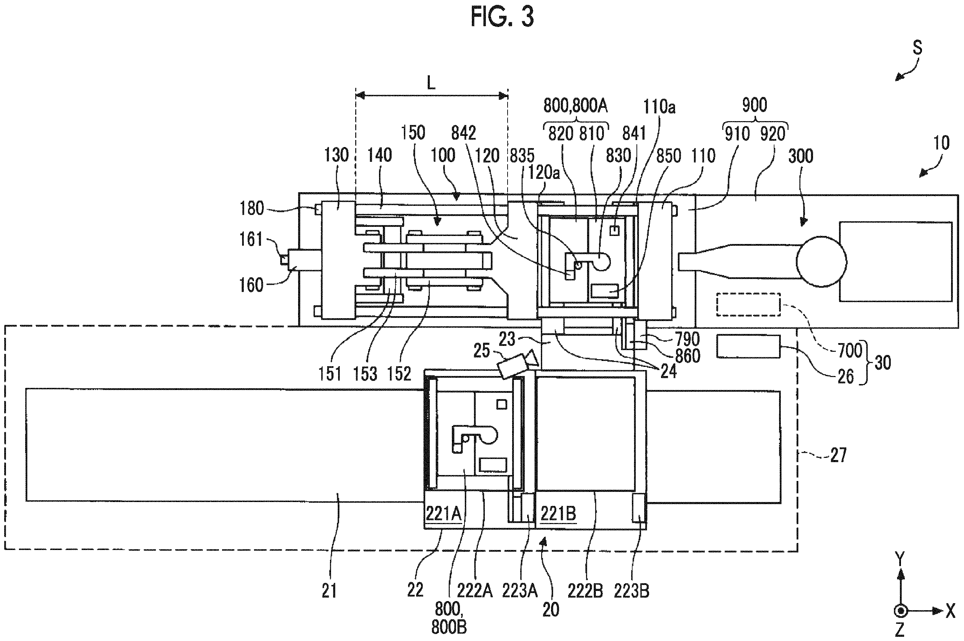

In Step S103, the molding machine control unit 702 instructs locking of the locking mechanism of the mold unit 800A. Specifically, the molding machine control unit 702 controls the mold clamping unit 100 to perform the mold closing of the mold unit 800. In addition, the molding machine control unit 702 transmits a lock command to the locking control unit 851 of the mold unit 800A via the auto couplers 790 and 860. The locking control unit 851 controls the lock lever drive unit 831 to move the lock lever 830 to the lock position. The injection molding system S when the processing of Step S103 ends is shown in Fig 3.

In Step S104, the molding machine control unit 702 checks the locked state of the mold unit 800A mounted on the injection molding machine 10. Specifically, the state signal acquisition unit 701 receives a state signal indicating the unlocking or locking from the state signal output unit 852 of the mold unit 800A via the auto couplers 860 and 790. The state signal acquisition unit 701 outputs the received state signal to the molding machine control unit 702. If the molding machine control unit 702 receives the state signal indicating that the mold unit 800A is locked, the molding machine control unit 702 permits carrying-out of the mold unit 800A (releases the interlock).

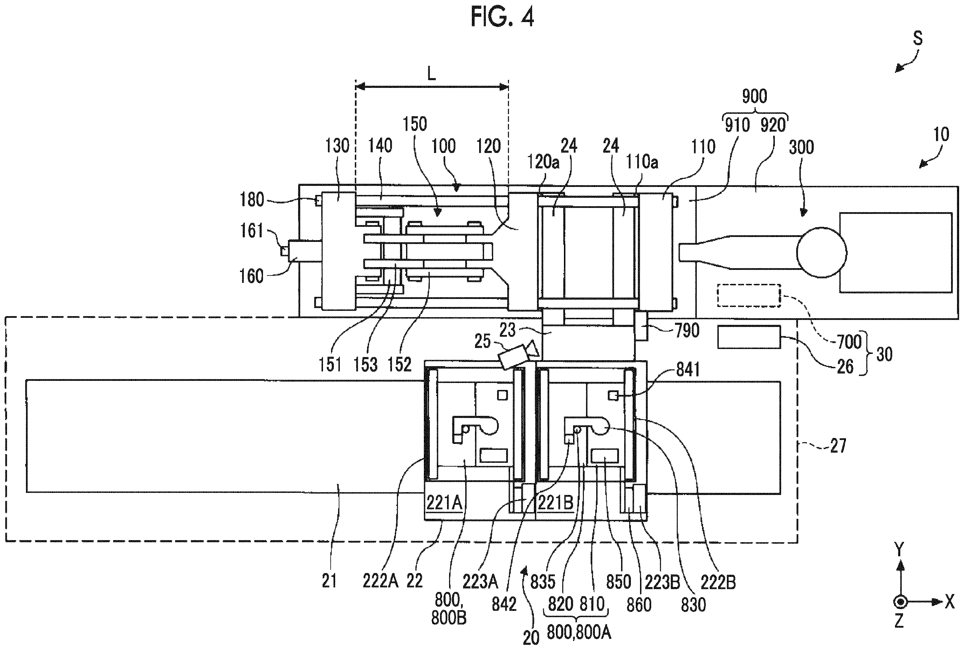

In Step S105, the control unit 30 (molding machine control unit 702, exchange device control unit 262) carries the mold unit 800A mounted on the injection molding machine 10 out to the second placement portion 221B of the carriage 22. Specifically, the molding machine control unit 702 releases clamping of the automatic clamping devices 110a and 120a. In addition, the auto couplers 790 and 860 are disconnected. In addition, after the clamping is released, the molding machine control unit 702 may move the movable platen 120 rearward to carry out the mold unit 800. Accordingly, the mold unit 800 is carried out, the mold unit 800 does not come into contact with the stationary platen 110 or the movable platen 120. The molding machine control unit 702 notifies the exchange device control unit 262 that a preparation (release of clamping, auto coupler, or the like) for carrying the mold unit 800A out of the injection moldingmachine 10 is completed. In addition, the exchange device control unit 262 controls the drive roller 24, the conveyor of the bridge 23, and the conveyor portion 222B to transport the mold unit 800A to the second placement portion 221B of the carriage 22. In addition, while the mold unit 800A is transported from the injection molding machine 10 to the carriage 22, the image of the lock lever 830 of the mold unit 800A is captured by the camera 25. The state signal acquisition unit 261 detects the locked state of the locking mechanism of the mold unit 800A from the image captured by the camera 25. In addition, in a case where an unlocked state of the locking mechanism of the mold unit 800A is detected, the transport of the mold unit 800A is stopped. If the mold unit 800A is placed on the second placement portion 221B of the carriage 22, the auto couplers 860 and 223B are connected. Accordingly, the monitoring of the locked state of the locking mechanism by the detection sensors 841 and 842 is resumed. The injection molding system S when the processing of Step S105 ends is shown in Fig. 4.

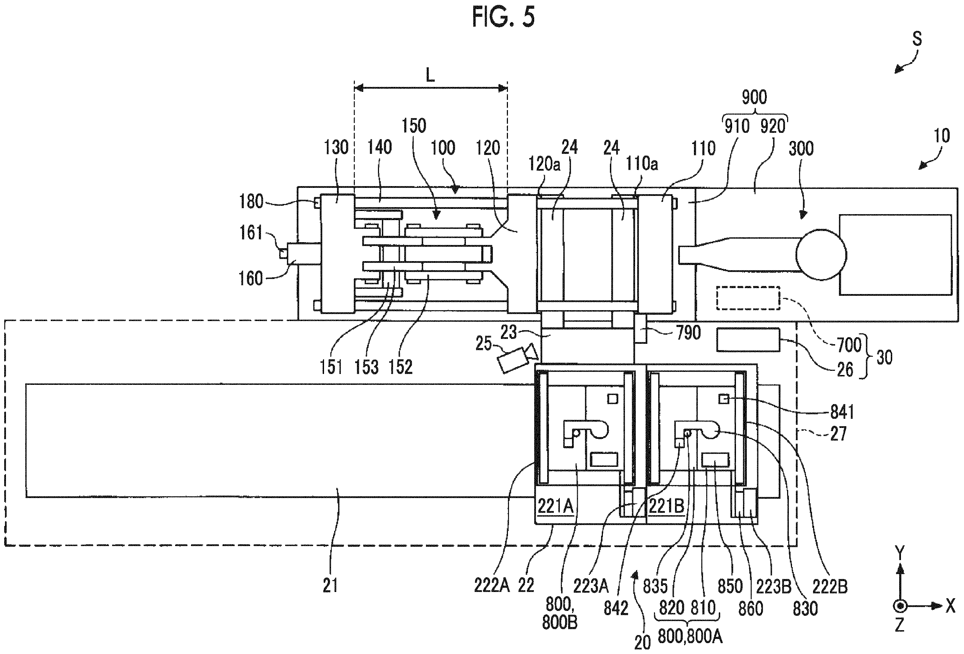

In Step S106, the exchange device control unit 262 moves the carriage 22 to a position at which the first placement portion 221A corresponds to the bridge 23. In addition, even during the movement of the carriage 22, the locked state of the locking mechanism of the mold unit 800B is monitored via the auto couplers 860 and 223A. In addition, the locked state of the locking mechanism of the mold unit 800A is monitored via the auto couplers 860 and 223B. In addition, in a case where the unlocked state of the locking mechanism of at least one of the mold units 800A and 800B is detected, the transport of the mold units 800A and 800B is stopped (the movement of the carriage 22 is stopped). The injection molding system S when the processing of Step S106 ends is shown in Fig. 5.

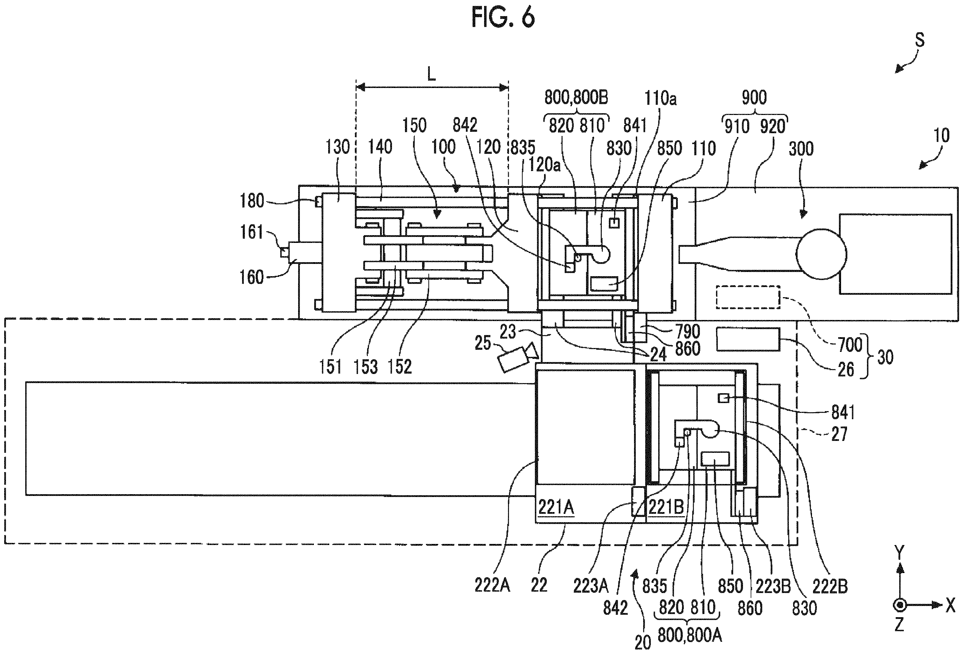

In Step S107, the control unit 30 (molding machine control unit 702, exchange device control unit 262) carries the mold unit 800B placed on the first placement portion 221A into the injection molding machine 10. Specifically, the exchange device control unit 262 disconnects the auto couplers 860 and 223A. In addition, the exchange device control unit 262 controls the conveyor portion 222A, the bridge 23, and the drive roller 24 to transport the mold unit 800B into the injection molding machine 10. In addition, while the mold unit 800B is transported from the carriage 22 to the injection molding machine 10, the image of the lock lever 830 of the mold unit 800B is captured by the camera 25. The state signal acquisition unit 261 detects the locked state of the locking mechanism of the mold unit 800B from the image captured by the camera 25. In addition, in a case where the unlocked state of the locking mechanism of the mold unit 800B is detected, the transport of the mold unit 800B is stopped. Next, the exchange device control unit 262 notifies the molding machine control unit 702 that the carrying of the mold unit 800B into the injection molding machine 10 is completed. The molding machine control unit 702 controls the mold clamping unit 100 to sandwich the mold unit 800. In addition, the molding machine control unit 702 controls the automatic clamping devices 110a and 120a to clamp the moldunit 800. Inaddition, the auto couplers 860 and 790 are connected. Accordingly, the monitoring of the locked state of the locking mechanism by the detection sensors 841 and 842 is resumed. The injection molding system S when the processing of Step S107 ends is shown in Fig. 6.

In Step S108, the molding machine control unit 702 instructs the unlocking of the locking mechanism of the mold unit 800B. Specifically, the molding machine control unit 702 transmits an unlock command to mold control unit 850 of the mold unit 800B via the auto couplers 790 and 860. The mold control unit 850 controls the lock lever drive unit 831 to move the lock lever 830 to an unlock position.

In Step S109, the molding machine control unit 702 checks the unlocked state of the mold unit 800B mounted on the injection molding machine 10. Specifically, the state signal acquisition unit 701 receives a state signal indicating the unlocking or locking from the state signal output unit 852 of the mold unit 800B via the auto couplers 860 and 790. The state signal acquisition unit 701 outputs the received state signal to the molding machine control unit 702. If the molding machine control unit 702 receives the state signal indicating that the mold unit 800B is unlocked, the molding machine control unit 702 permits the mold opening of the mold unit 800B (releases the interlock) . The molding machine control unit 702 notifies the exchange device control unit 262 that the attachment of the mold unit 800B to the injection molding machine 10 is completed.

In Step S110, the exchange device control unit 262 moves the carriage 22 to an initial position. Moreover, even during the movement of the carriage 22, the locked state of the locking mechanism of the mold unit 800A is monitored via the auto couplers 860 and 223B. In addition, in the case where the unlocked state of the locking mechanism of the mold unit 800A is detected, the transport of the mold unit 800A is stopped. The injection molding system S when the processing of Step S110 ends is shown in Fig 6.

As described above, according to the injection molding system S according to the embodiment, the locked state and the unlocked state of the locking mechanism of the mold unit 800 can be controlled by the control unit 30 (molding machine controller 700, exchange device controller 26). Accordingly, at the time of the mold exchange, it is possible to eliminate a need for a manned work such as an operator attaching or removing a mold locking plate.

In addition, before or during the transport of the mold unit 800, the control unit 30 can monitor the locked state of the locking mechanism of the mold unit 800. Accordingly, it is possible to prevent the mold unit 800 from being opened during the transport. Thus, it is possible to prevent the mold unit 800 from being dropped out or coming into contact with the surroundings during the transport and being damaged.

In addition, after the mold unit 800 is mounted on the injection molding machine 10, the control unit 30 checks that the locking mechanism of the mold unit 800 is in the unlocked state, and then, permits the mold opening of the mold unit 800. Accordingly, it is possible to prevent the mold from being opened in a state where the locking mechanism is in the locked state, and it is possible to prevent the locking mechanism from being damaged.

### <<Injection Molding System According to Another Embodiment>>

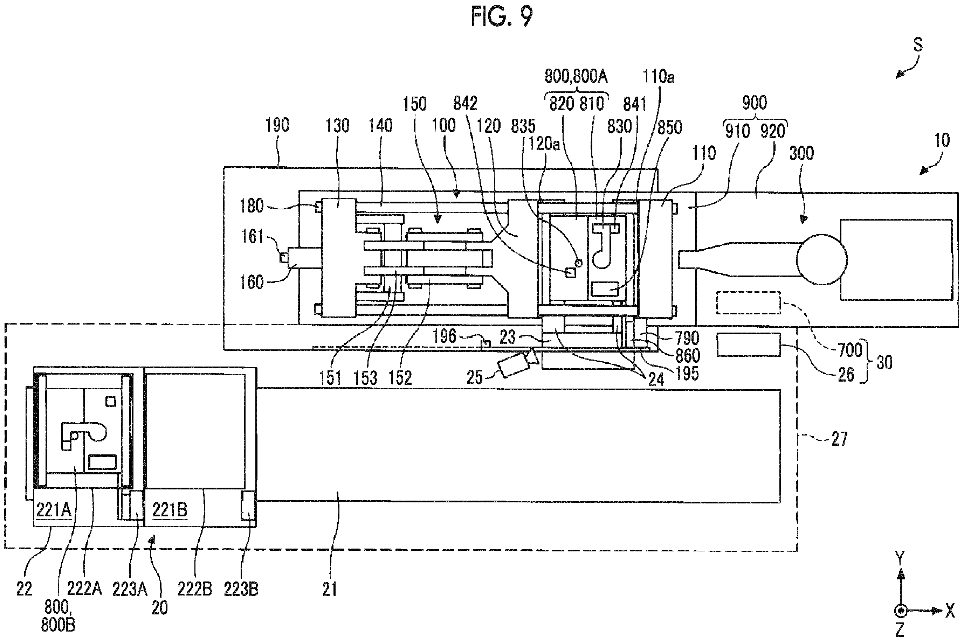

Next, an injection molding system S according to another embodiment will be described with reference to Figs. 9 to 11. Fig. 9 a plan view of the injection molding system S according to another embodiment.

The injection molding system S according to another embodiment is different from the injection molding system S according to the embodiment in that a cover 190 which covers the mold clamping unit 100, a door 195, and a door opening/closing mechanism 196 are provided. The other configurations are the same as those of the injection molding machine according to the embodiment, and repeated descriptions will be omitted.

### <Operation of Injection Molding System>

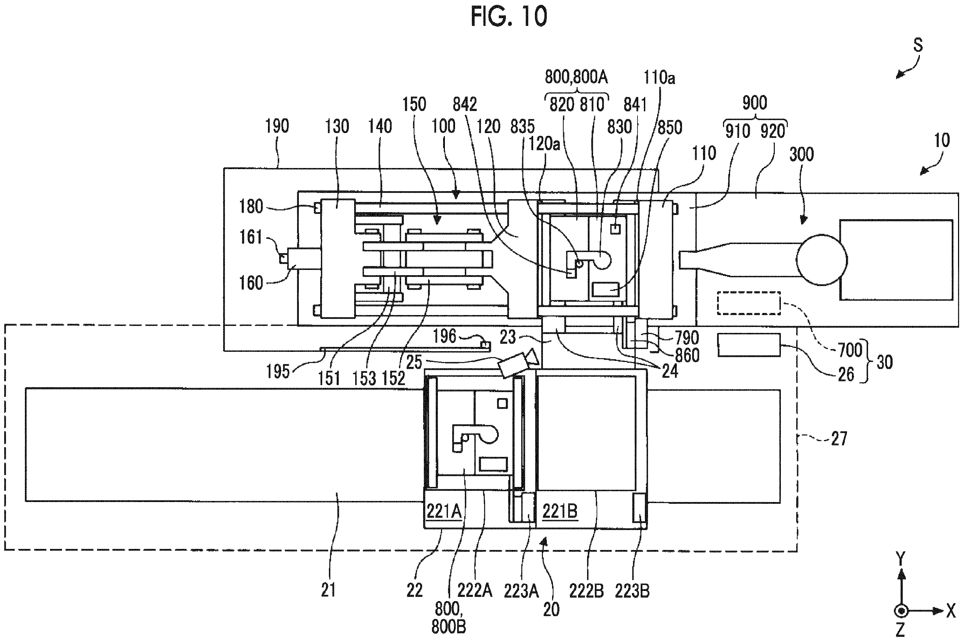

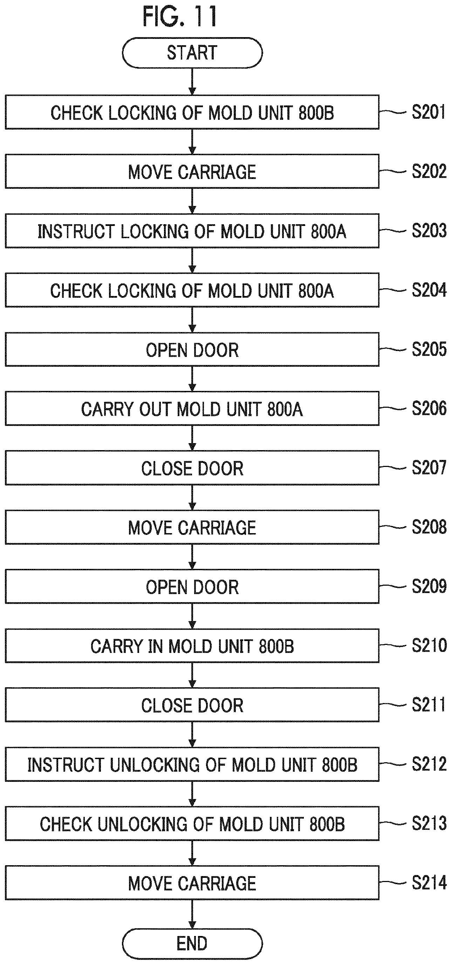

Next, the operation of the injection molding system S according to another embodiment will be described using Fig. 11 with reference to Figs. 9 and 10. Fig. 11 is a flowchart of a control for exchanging the mold unit 800 in the injection molding system S according to another embodiment.

When a flow shown in Fig. 11 starts, the injection molding system S is in the state shown in Fig 9. That is, the mold unit 800A is attached to the injection molding machine 10. In addition, the mold unit 800B carried in from the outside is placed on the first placement portion 221A of the carriage 22. In addition, the door 195 is closed. Hereinafter, an operation of exchanging the mold unit 800 A with the mold unit 800B in the mold unit attached to the injection molding machine 10 will be described.

As in Step S101, in Step S201, the exchange device control unit 262 checks the locked state of the locking mechanism of the mold unit 800B placed on the carriage 22.

As in Step S102, in Step S202, the exchange device control unit 262 moves the carriage 22 to the position at which the second placement portion 221B corresponds to the bridge 23.

As in Step S103, in Step S203, the molding machine control unit 702 instructs the locking of the locking mechanism of the mold unit 800A.

As in Step S104, in Step S204, the molding machine control unit 702 checks the locked state of the mold unit 800A mounted on the injection molding machine 10. If the molding machine control unit 702 receives the state signal indicating that the mold unit 800A is locked, the molding machine control unit 702 permits opening of the door 195 (releases the interlock). In addition, in a case where the mold unit 800A is in the unlocked state, the opening of the door 195 is not permitted.

In Step S205, the molding machine control unit 702 instructs the opening of the door 195. Specifically, the molding machine control unit 702 controls the door opening/closing mechanism 196 to open the door 195. The molding machine control unit 702 detects an open state of the door 195 by a limit switch or the like. If the molding machine control unit 702 detects the opening of the door 195, the molding machine control unit permits the carrying-out of the mold unit 800A (releases the interlock). The injection molding system S when the processing of Step S105 ends is shown in Fig. 10.

As in Step S105, in Step S206, the control unit 30 (molding machine control unit 702, exchange device control unit 262) carries the mold unit 800A mounted on the injection molding machine 10 out to the second placement portion 221B of the carriage 22. In addition, the molding machine control unit 702 checks the locked states of the mold units 800A and 800B via the exchange device control unit 262. If the molding machine control unit 702 receives the state signals indicating that the mold units 800A and 800B are locked, the molding machine control unit 702 permits closing of the door 195 (releases the interlock).

In Step S207, the molding machine control unit 702 instructs the closing of the door 195. Specifically, the molding machine control unit 702 controls the door opening/closing mechanism 196 to close the door 195. The molding machine control unit 702 detects a closed state of the door 195 by a limit switch or the like. When the closing of the door 195 is detected, the molding machine control unit 702 notifies the exchange device control unit 262 that the closing of the door 195 is completed.

As in Step S106, in Step S208, the exchange device control unit 262 moves the carriage 22 to the position at which the first placement portion 221A corresponds to the bridge 23. In addition, the molding machine control unit 702 checks the locked states of the mold units 800A and 800B via the exchange device control unit 262. If the molding machine control unit 702 receives the state signals indicating that the mold units 800A and 800B are locked, the molding machine control unit 702 permits opening of the door 195 (releases the interlock).

In Step S209, the molding machine control unit 702 instructs the opening of the door 195. Specifically, the molding machine control unit 702 controls the door opening/closing mechanism 196 to open the door 195. The molding machine control unit 702 detects the open state of the door 195 by a limit switch or the like. When the opening of the door 195 is detected, the molding machine control unit 702 permits the carrying-in of the mold unit 800B (releases the interlock).

As in Step S107, in Step S210, the control unit 30 (molding machine control unit 702, exchange device control unit 262) carries the mold unit 800B placed on the first placement portion 221A into the injection molding machine 10. In addition, the molding machine control unit 702 checks the locked state of the mold unit 800B. If the molding machine control unit 702 receives the state signal indicating that the mold unit 800B is locked, the molding machine control unit 702 permits the closing of the door 195 (releases the interlock).

In Step S211, the molding machine control unit 702 instructs the closing of the door 195. Specifically, the molding machine control unit 702 controls the door opening/closing mechanism 196 to close the door 195. The molding machine control unit 702 detects a closed state of the door 195 by a limit switch or the like. If the closing of the door 195 is detected, the processing proceeds to the next processing.

As in Step S108, in Step S212, the molding machine control unit 702 instructs the unlocking of the locking mechanism of the mold unit 800B.

As in Step S109, in Step S213, the molding machine control unit 702 checks the unlocked state of the mold unit 800B mounted on the injection molding machine 10.

As in Step S110, in Step S214, the exchange device control unit 262 moves the carriage 22 to the initial position.

As described above, according to the injection molding machine 10 of another embodiment, similarly to the injection molding machine system S of the embodiment, the locked state and the unlocked state of the locking mechanism of the mold unit 800 can be controlled by the control unit 30 (molding machine controller 700, exchange device controller 26). Accordingly, at the time of the mold exchange, it is possible to eliminate a need for a manned work such as an operator attaching or removing a mold locking plate . In addition, before or during the transport of the mold unit 800, the control unit 30 can monitor the locking mechanism of the mold unit 800. Accordingly, it is possible to prevent the mold unit 800 from being opened during the transport. Moreover, after the mold unit 800 is mounted on the injection molding machine 10, the control unit 30 checks that the locking mechanism of the mold unit 800 is in the unlocked state, and then, permits the mold opening of the mold unit 800. Accordingly, it is possible to prevent the mold from being opened in a state where the locking mechanism is in the locked state, and it is possible to prevent the locking mechanism from being damaged.

In addition, according to the injection molding machine 10 of another embodiment, it is possible to control the opening or closing of the door 195 of the cover 190 which covers the mold clamping unit 100. Accordingly, it is possible to prevent the worker or the like from entering the mold clamping unit 100 during the operation of the mold clamping unit 100. In addition, before the opening or closing of the door 195 is instructed, the state signal of the mold unit 800 is acquired. Accordingly, for example, in a case where the mold unit 800 in the injection molding machine 10 is in the unlocked state and cannot be carried out from the injection molding machine 10, the door 195 can be prevented from opening. Moreover, in a case where the mold unit 800 placed on the carriage 22 is in the unlocked state and cannot be carried in the injection molding machine 10, the door 195 can be prevented from opening.

Hereinbefore, embodiments and the like of the injection molding system S are described. The present invention is not limited to the above embodiments or the like, and various modifications and improvements may be made within the scope of the present invention described in Claims.

In the injection molding system S, the state signal acquisition unit 701 and 261 are respectively provided in the molding machine controller 700 and the exchange device controller 26. However, the present invention is not limited to this, and the state signal acquisition unit may be provided in any one of the molding machine controller 700 and the exchange device controller 26 such that receiving and transmission of the state signal can be performed between the molding machine controller 700 and the exchange device controller 26.

The mold control unit 850 and the control unit 30 (molding machine controller 700, exchange device controller 26) are connected to each other by the auto coupler. However, the present invention is not limited to this, and the mold control unit 850 and the control unit 30 may communicate with each other by wireless . Accordingly, even when the mold unit 800 is carried into the injection molding machine 10 and the mold unit 800 is carried out from the injection molding machine 10, it is possible to monitor the locked state of the locking mechanisms by the detection sensors 841 and 842.

In the exchange device controller 26, the mold unit 800 is transported by the drive roller conveyor. However, the present invention is not limited to this, and the mold unit 800 may be transported by a belt conveyor. In addition, the mold unit 800 may be transported using a pusher device, which presses the mold unit 800 to carry the mold unit 800 into the injection molding machine 10 when the mold unit 800 is carried into the injection molding machine 10 and engages with a hook provided in the mold unit 800 to pull out the mold unit 800 from the injection molding machine 10 when the mold unit 800 is carried out from the injection molding machine 10.

### Brief Description of the Reference Symbols

S: injection molding system 10: injection molding machine
20: mold exchange device
30: control unit
100: mold clamping unit
110: stationary platen
120: movable platen
110a, 120a: automatic clamping device
700: molding machine control unit (control unit)
701: state signal acquisition unit
702: molding machine control unit
790: auto coupler
800: mold unit
810: stationary mold
820: movable mold
830: lock lever (locking mechanism)
835: lock pin (locking mechanism)
841, 842: detection sensor (detection unit)
850: mold control unit
851: locking control unit
852: state signal output unit
860: auto coupler
21: traveling rail
22: carriage
23: bridge
24: drive roller
35: camera (detection unit)
26: exchange device controller (control unit)
261: state signal acquisition unit
262: exchange device control unit
27: fence
221A: first placement portion
221B: second placement portion
222A, 222B: conveyor portion
223A, 223B: auto coupler
190: cover
195: door
196: door opening/closing mechanism

## Claims

1. An injection molding system (S), comprising:
a mold clamping unit (100) adapted to attach a mold unit (800) to a stationary platen (110) and a movable platen (120); and
a mold exchange device (20) adapted to exchange the mold unit (800) attached to the mold clamping unit (100);
**characterized in that**
the injection molding system (S) further comprises
a control unit (30) adapted to control the mold clamping unit (100) and the mold exchange device (20), and
a detection unit (841, 842) adapted to detect a locked state and an unlocked state of a locking mechanism (830, 835),
the mold unit (800) includes the locking mechanism (830, 835) which has the locked state where a stationary mold (810) and a movable mold (820) are locked and the unlocked state where locks of the stationary mold (810) and the movable mold (820) are released,
the control unit (30) is adapted to control the locked state and the unlocked state of the locking mechanism (830, 835), and
in a case where it is detected that the locking mechanism (830, 835) of the mold unit (800) attached to the mold clamping unit (100) is in the unlocked state, the control unit (30) permits mold opening by the mold clamping unit (100).

2. The injection molding system (S) according to claim 1,
wherein the detection unit (841, 842) is provided in the mold unit (800).

3. The injection molding system (S) according to claim 1 or 2,
wherein the detection unit (841, 842) includes a camera (35) which is adapted to capture an image of the locking mechanism (830, 835) of the mold unit (800).

4. The inj ection molding system (S) according to anyone of claims 1 to 3,
wherein in a case where it is detected that the locking mechanism (830, 835) is in the locked state, the control unit (30) permits transport of the mold unit (800) by the mold exchange device (20).

## Patentansprüche

1. Spritzgießsystem (S), umfassend:
eine Formschließ-/klemmeinheit (100), die eingerichtet ist, eine Formeinheit (800) an einer stationären Platte (110) und einer beweglichen Platte (120) zu befestigen; und
eine Formaustauschvorrichtung (20), die eingerichtet ist, die Formeinheit (800), die an der Formschließ-/klemmeinheit (100) befestigt ist, auszutauschen;
**dadurch gekennzeichnet, dass**
das Spritzgießsystem (S) ferner
eine Steuereinheit (30), die eingerichtet ist, die Formschließ-/klemmeinheit (100) und die Formaustauschvorrichtung (20) zu steuern, und
eine Detektionseinheit (841, 842), die eingerichtet ist, einen verriegelten Zustand und einen nicht-verriegelten Zustand eines Verriegelungsmechanismus (830, 835) zu detektieren, aufweist,
die Formeinheit (800) den Verriegelungsmechanismus (830, 835) aufweist, welcher den verriegelten Zustand, in dem eine stationäre Form (810) und eine bewegliche Form (820) verriegelt sind, und den nicht-verriegelten Zustand, in dem Verriegelungen der stationären Form (810) und der beweglichen Form (820) freigegeben sind, aufweist,
die Steuereinheit (30) eingerichtet ist, den verriegelten Zustand und den nicht-verriegelten Zustand des Verriegelungsmechanismus (830, 835) zu steuern, und
in einem Fall, in dem detektiert wird, dass der Verriegelungsmechanismus (830, 835) der Formeinheit (800), die an der Formschließ-/klemmeinheit (100) befestigt ist, in dem nicht-verriegelten Zustand ist, die Steuereinheit (30) ein Form-Öffnen durch die Formschließ-/klemmeinheit (100) erlaubt.

2. Spritzgießsystem (S) nach Anspruch 1,
wobei die Detektionseinheit (841, 842) in der Formeinheit (800) vorgesehen ist.

3. Spritzgießsystem (S) nach Anspruch 1 oder 2,
wobei die Detektionseinheit (841, 842) eine Kamera (35) aufweist, die eingerichtet ist, ein Bild des Verriegelungsmechanismus (830, 835) der Formeinheit (800) aufzunehmen.

4. Spritzgießsystem (S) nach einem der Ansprüche 1 bis 3,
wobei in einem Fall, in dem detektiert wird, dass der Verriegelungsmechanismus (830, 835) in dem verriegelten Zustand ist, die Steuereinheit (30) einen Transport der Formeinheit (800) durch die Formaustauschvorrichtung (20) erlaubt.

## Revendications

1. Un système de moulage par injection (S), comprenant :
une unité de fermeture de moule (100) apte à fixer une unité de moulage (800) à une plaque fixe (110) et à une plaque mobile (120) ; et
un dispositif d'échange de moule (20) apte à échanger l'unité de moulage (800) fixée à l'unité de fermeture de moule (100) ;
**caractérisé en ce que**
le système de moulage par injection (S) comprend en outre :
une unité de commande (30) apte à commander l'unité de fermeture de moule (100) et le dispositif d'échange de moule (20) ; et
une unité de détection (841, 842) apte à détecter un état verrouillé et un état déverrouillé d'un mécanisme de verrouillage (830, 835) ;
l'unité de moulage (800) inclut le mécanisme de verrouillage (830, 835) qui présente l'état verrouillé, où un moule fixe (810) et un moule mobile (820) sont verrouillés, et l'état déverrouillé, où les verrous du moule fixe (810) et du moule mobile (820) sont libérés ;
l'unité de commande (30) est apte à commander l'état verrouillé et l'état déverrouillé du mécanisme de verrouillage (830, 835); et
dans un cas où il est détecté que le mécanisme de verrouillage (830, 835) de l'unité de moulage (800) fixée à l'unité de fermeture de moule (100) est à l'état déverrouillé, l'unité de commande (30) permet l'ouverture du moule par l'unité de fermeture de moule (100).

2. Le système de moulage par injection (S) selon la revendication 1,
dans lequel l'unité de détection (841, 842) est fournie dans l'unité de moulage (800).

3. Le système de moulage par injection (S) selon la revendication 1 ou 2,
dans lequel l'unité de détection (841, 842) inclut une caméra (35) qui est apte à capturer une image du mécanisme de verrouillage (830, 835) de l'unité de moulage (800).

4. Le système de moulage par injection (S) selon l'une quelconque des revendications 1 à 3,
dans lequel, dans un cas où il est détecté que le mécanisme de verrouillage (830, 835) est à l'état verrouillé, l'unité de commande (30) permet le transport de l'unité de moulage (800) par le dispositif d'échange de moule (20).
